# EUROPEAN PATENT APPLICATION

(11) **EP 4 517 634 A1**
(43) Date of publication of application: **05.03.2025**
(21) Application number: 24197253.8
(22) Date of filing: 29.08.2024
(51) Int. Cl.: G06Q 30/0283

(54) **COST CALCULATION METHOD, RECORDING MEDIUM RECORDING PROGRAM, AND INFORMATION PROCESSING DEVICE**

(30) Priority: 30.08.2023 JP 2023139662
(71) Applicant: Seiko Epson Corporation, Tokyo 160-8801 (JP)
(72) Inventor: KITABAYASHI, Kazuyoshi, Suwa-shi, 392-8502 (JP)
(74) Representative: Lewis Silkin LLP

(57) **Abstract**

According to an aspect of the present disclosure, there is provided a cost calculation method, by a computer, including estimating a shape of at least one object by analyzing a captured image obtained by capturing an image of the at least one object, calculating, based on the shape of the at least one object, cost concerning creation of an image to be projected onto the at least one object using a projector, and notifying the cost.

## Description

The present application is based on, and claims priority from JP Application Serial Number 2023-139662, filed August 30, 2023, the disclosure of which is hereby incorporated by reference herein in its entirety.

### BACKGROUND

### 1. Technical Field

The present disclosure relates to a cost calculation method, a recording medium recording a program, and an information processing device.

### 2. Related Art

In projection mapping for projecting an image onto a projection target object, which is a stereoscopic object, using equipment such as a projector, in general, it is necessary to adjust the position, the shape, and the size of the image to match the position, the shape, and the size of the projection target object.

For example, JP-A-2017-192040 describes a method of acquiring a projection device viewpoint image of a three-dimensional projection target, preparing a three-dimensional model corresponding to the projection target as projection content, converting the three-dimensional model into a two-dimensional image matching the projection device viewpoint image, and projecting the two-dimensional image onto the projection target.

JP-A-2017-192040 is an example of the related art.

When content of an image adjusted to a projection target is created, since content is individually created for each projection target as in JP-A-2017-192040, cost required to create the content differs depending on the size, the shape, and the like of the projection target. In the related art, it has been difficult to forecast the cost in such a case.

### SUMMARY

According to an aspect of the present disclosure, there is provided a cost calculation method, by a computer, including: estimating a shape of at least one object by analyzing a captured image obtained by capturing an image of the at least one object; calculating, based on the shape of the at least one object, cost concerning creation of an image to be projected onto the at least one object using a projector; and notifying the cost.

According to an aspect of the present disclosure, there is provided a recording medium recording a program, the program causing a computer to execute: estimating a shape of at least one object by analyzing a captured image obtained by capturing an image of the at least one object; calculating, based on the shape of the at least one object, cost concerning creation of an image to be projected onto the at least one object using a projector; and notifying the cost.

According to an aspect of the present disclosure, there is provided an information processing device including a processing device that executes: estimating a shape of at least one object by analyzing a captured image obtained by capturing an image of the at least one object; calculating, based on the shape of the at least one object, cost concerning creation of an image to be projected onto the at least one object using a projector; and notifying the cost.

### BRIEF DESCRIPTION OF THE DRAWINGS

FIG. 1 is a schematic diagram of a system used for a cost calculation method according to an embodiment.
FIG. 2 is a diagram illustrating a camera and a projector.
FIG. 3 is a block diagram of an information processing device according to the embodiment.
FIG. 4 is a flowchart illustrating a flow of a cost calculation method according to the embodiment.
FIG. 5 is a diagram illustrating installation of the projector.
FIG. 6 is a diagram illustrating installation of the camera.
FIG. 7 is a diagram illustrating an instruction to start acquisition of a captured image used for measurement of a projection surface.
FIG. 8 is a diagram illustrating a display example of calculated cost.
FIG. 9 is a diagram illustrating an example of a unit price table used for calculating cost.
FIG. 10 is a diagram illustrating a display example for changing an estimation region.
FIG. 11 is a diagram illustrating operation of changing the estimation region.
FIG. 12 is a diagram illustrating a display example after the estimation region is changed.
FIG. 13 is a diagram illustrating a display example for a content creation request.

### DESCRIPTION OF EMBODIMENTS

Preferred embodiments according to the present disclosure are explained below with reference to the accompanying drawings. Note that, in the drawings, the dimensions and the scales of units are different from actual ones as appropriate. Some portions are schematically illustrated in order to facilitate understanding. The scope of the present disclosure is not limited to these embodiments unless particularly described to limit the present disclosure in the following explanation.

### 1. Embodiment

### 1-1. Overview of a system used for a cost calculation method

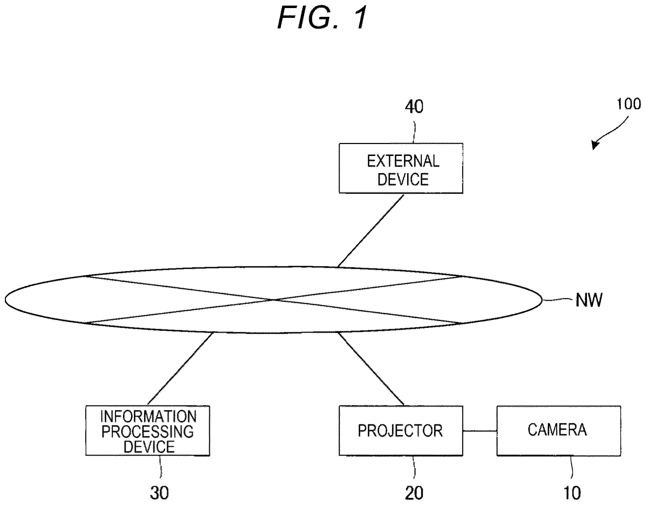

FIG. 1 is a schematic diagram of a system 100 used for a cost calculation method according to an embodiment. The system 100 is a projection mapping system and has a function of calculating cost required for creating an image used for projection mapping. In the following explanation, the image is sometimes referred to as content. The content may be a still image or may be a moving image.

As illustrated in FIG. 1, the system 100 includes a camera 10, a projector 20, an information processing device 30, and an external device 40. These are communicably connected to one another via a network NW including the Internet. The camera 10, the projector 20, the information processing device 30, and the external device 40 may be communicably connected by radio or wire not via the network NW.

The camera 10 is a digital camera including an image capturing element such as a CCD (Charge Coupled Device) or a CMOS (Complementary Metal Oxide Semiconductor) and captures an image of a projection region RP of the projector 20.

The projector 20 is a display device that projects an image onto a projection target object under the control by the information processing device 30.

Although not illustrated, the projector 20 includes an image processing circuit, a light source, a light modulation device, and a projection optical system. The image processing circuit of the projector 20 is a circuit that controls driving of the light modulation device of the projector 20 based on information from the information processing device 30. The light source of the projector 20 includes, for example, halogen lamps, xenon lamps, ultra-high pressure mercury lamps, LEDs (Light Emitting Diodes), or laser light sources, which respectively emit red light, green light, and blue light. The light modulation device of the projector 20 includes three light modulation elements provided to correspond to red, green, and blue. Each of the three light modulation elements is a display panel such as a transmissive liquid crystal panel, a reflective liquid crystal panel, or a DMD (digital mirror device). The three light modulation elements respectively modulate red, green, and blue lights based on a signal from the image processing circuit of the projector 20 to generate image lights of the colors. The image lights of the colors are combined by a color combination optical system to be full color image light. The projection optical system of the projector 20 is an optical system including a projection lens and the like and projects the full color image light explained above onto a projection target object to form an image thereon.

The information processing device 30 is a computer such as a laptop computer, a desktop computer, a smartphone, or a tablet terminal that executes a cost calculation method. The information processing device 30 has a function of controlling the operations of the camera 10 and the projector 20 and a function of calculating cost concerning an image used for projection of the projector 20 using a captured image acquired from the camera 10.

The external device 40 is a computer owned or managed by a company or the like who creates the image used for the projection of the projector 20. The external device 40 may be a computer owned or managed by the company or the like, a server device connected to the information processing device 30, or the like.

### 1-2. Camera and projector

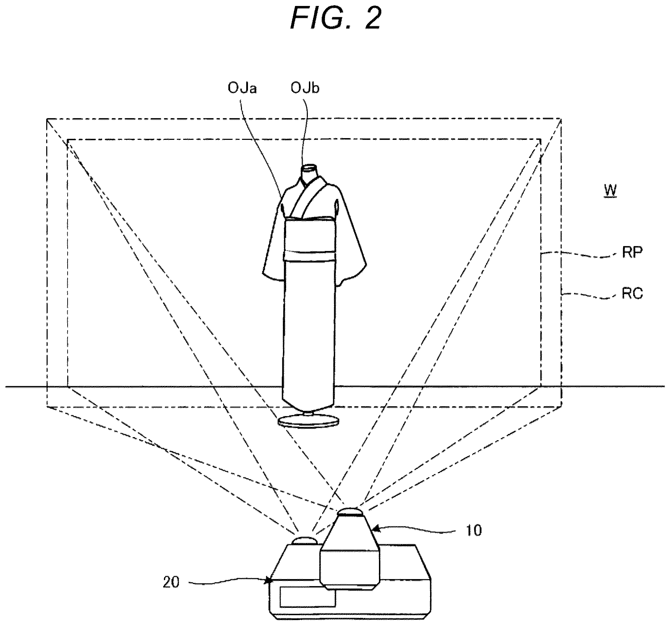

FIG. 2 is a diagram illustrating the camera 10 and the projector 20. In FIG. 2, a case in which an image is projected to match the shape and the like of an object OJa, which is a projection target object, is exemplified.

In the example illustrated in FIG. 2, the object OJa is a kimono having a solid color such as white worn on an object OJb in the front of a wall W. The object OJb is, for example, a torso or a mannequin. The shape, the size, the position, and the like of each of the objects OJa and OJb are not limited to the example illustrated in FIG. 2 and are optional. The object OJa only has to be a projection target object of projection mapping and is not limited to the kimono and is optional. The object OJb is not limited to the torso or the mannequin and may be used according to necessity or may be omitted.

The camera 10 generates captured image data DGa explained below indicating a captured image obtained by capturing an image of the objects OJa and OJb. Here, the objects OJa and OJb are included in an image capturing region RC that is a region where image capturing by the camera 10 is possible.

The projector 20 projects an image onto the object OJa under the control by the information processing device 30. Here, the objects OJa and OJb are included in the projection region RP, which is a region where projection by the projector 20 is possible.

In the example illustrated in FIG. 2, the projection region RP is included in the image capturing region RC. The projection region RP only has to include the objects OJa and OJb and may include a portion not included in the image capturing region RC. An installation position and an installation posture of the projector 20 are not limited to the example illustrated in FIG. 2 and are optional.

### 1-3. Information processing device

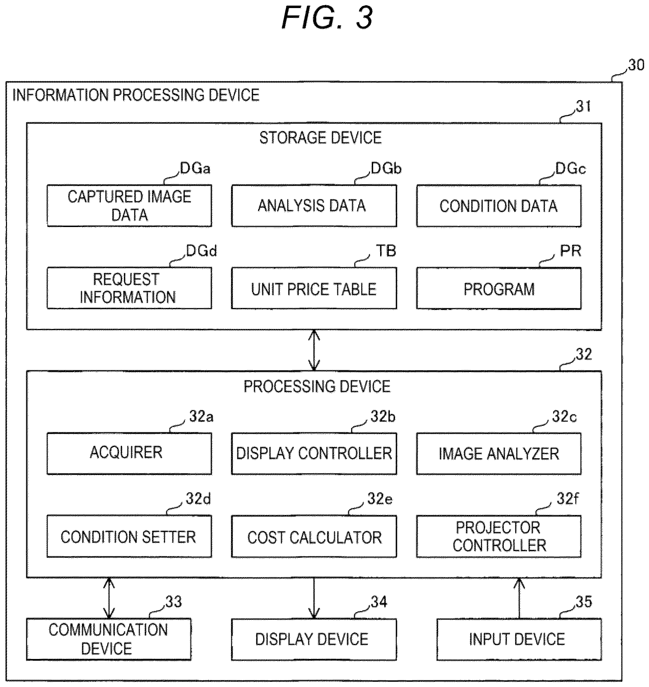

FIG. 3 is a block diagram of the information processing device 30 according to the embodiment. As illustrated in FIG. 3, the information processing device 30 includes a storage device 31, a processing device 32, a communication device 33, a display device 34, and an input device 35. These devices are communicably connected to one another.

The storage device 31 is a storage device that stores programs such as an operating system and application programs to be executed by the processing device 32 and data to be processed by the processing device 32. The storage device 31 includes, for example, a hard disk drive or a semiconductor memory. A part or the entire storage device 31 may be an external storage device of the information processing device 30 or may be provided in an external device such as a server connected to the information processing device 30 via a communication network such as the Internet.

The storage device 31 stores a program PR, captured image data DGa, analysis data DGb, condition data DGc, request information DGd, and a unit price table TB.

The program PR is a program for executing a cost calculation method explained in detail below. The captured image data DGa is data indicating a captured image acquired from the camera 10.

The captured image data DGa is data indicating a plurality of captured images obtained at the time of measurement in an acquirer 32a explained below. The plurality of captured images include an initially captured image, which is a captured image obtained by capturing an image of the projection region RP when a black image or a white image included in a plurality of pattern images explained below is projected onto the projection region RP. The captured image data DGa may include data indicating a captured image different from a captured image obtained at the time of measurement in the acquirer 32a explained below. The initially captured image may be a captured image obtained by capturing an image of the projection region RP in a state in which projection of the projector 20 is not performed.

The analysis data DGb includes data indicating the shape of a projection surface in the image capturing region RC and data indicating a contrast ratio, which is an index value concerning the brightness of a space in which image capturing of the camera 10 has been performed. The analysis data DGb is obtained by an analysis of an image analyzer 32c explained below. The data indicating the shape of the projection surface in the image capturing region RC indicates, for example, a region where the projection surface is divided for each object. The data indicating the shape of the projection surface indicates whether the shape of regions of the projection surface is a three-dimensional shape or a two-dimensional shape. Accordingly, the data indicating the shape of the projection surface indicates whether the shape of the object OJa is a three-dimensional shape or a two-dimensional shape. The data indicating the shape of the projection surface may be data obtained by further dividing the regions of the projection surface for each of types of shapes to belong to any one of a plane, a cylindrical surface, a spherical surface, and a complex surface. The types of the shapes are examples. The shapes of the projection surface may be classified into a smaller number of types or may be classified into a larger number of types. The complex surface is a region having a shape not classified into all other types of shapes. The region having the two-dimensional shape may be classified according to types of two-dimensional shapes such as a polygon, a circle, and a complicated shape.

The condition data DGc is information indicating a condition necessary for calculating the cost concerning the image used for the projection of the projector 20. The condition includes, for example, at least one of a time length of the image used for the projection of the projector 20, the area of a projection target object, and the number of projection target objects. The time length of the image is, for example, when the image is one moving image, the length of a time required to reproduce the image once. When the image is a still image, the cost may be calculated assuming that the time length is a fixed value. The area of the projection target object may be a single numerical value such as "1.5 m²" or may be a range of a numerical range such as "1.5 m² or more and less than 2.0 m²".

The unit price table TB is data indicating a correspondence relationship between cost per unit area of the image used for the projection of the projector 20 and the shape of the projection target object.

The request information DGd includes information indicating an estimation result of cost necessary for creation of the image used for the projection of the projector 20 and information indicating at least one captured image among the plurality of captured images indicated by the captured image data DGa.

The processing device 32 is a processing device having a function of controlling the units of the information processing device 30 and a function of processing various data. The processing device 32 includes, for example, a processor such as a CPU (Central Processing Unit). The processing device 32 may be configured by a single processor or may be configured by a plurality of processors. A part or all of the functions of the processing device 32 may be implemented by hardware such as a DSP (Digital Signal Processor), an ASIC (Application Specific Integrated Circuit), a PLD (Programmable Logic Device), or an FPGA (Field Programmable Gate Array).

The communication device 33 is a communication device capable of communicating with the projector 20 and the like. For example, the communication device 33 is a wired communication device such as a wired LAN (Local Area Network), a USB (Universal Serial Bus), or a HDMI (High Definition Multimedia Interface) or a wireless communication device such as a LPWA (Low Power Wide Area), a wireless LAN including Wi-Fi, or Bluetooth. Each of "HDMI", "Wi-Fi", and "Bluetooth" is a registered trademark. The communication device 33 may be capable of communicating with the camera 10 or may be capable of communicating with a device such as an external server.

The display device 34 displays various images under the control by the processing device 32. The display device 34 is a display device including various display panels such as a liquid crystal display panel and an organic EL (electro-luminescence) display panel. The display device 34 of the present embodiment is a touch panel as explained below and serves as the input device 35.

The input device 35 is input equipment that receives operation from the user. The input device 35 is not limited to the touch panel and may be, for example, a touch pad provided separately from the display device 34 or a pointing device such as a mouse.

In the information processing device 30 explained above, the processing device 32 implements various functions by executing the program PR stored in the storage device 31. Specifically, the processing device 32 executes the program PR to thereby function as an acquirer 32a, an image analyzer 32c, a display controller 32b, a condition setter 32d, a cost calculator 32e, and a projector controller 32f. Therefore, the processing device 32 includes the acquirer 32a, the display controller 32b, the image analyzer 32c, the condition setter 32d, the cost calculator 32e, and the projector controller 32f.

The acquirer 32a acquires various information from various kinds of equipment coupled to the information processing device 30 by controlling the operation of the communication device 33 and causes the storage device 31 to store the acquired information. The acquirer 32a acquires the captured image data DGa from the camera 10. Specifically, the acquirer 32a acquires a plurality of captured images by causing the projector 20 to sequentially project a plurality of pattern images onto the projection target object and causing the camera 10 to capture the projected pattern images. Accordingly, the captured image data DGa is obtained.

The display controller 32b controls the operation of the display device 34 to thereby cause the display device 34 to display various information. Specifically, the display controller 32b causes the display device 34 to display a user interface image GU explained below necessary for executing the cost calculation method explained below. The user interface image GU is capable of receiving input of information necessary for generating the condition data DG. Although not illustrated, the user interface image GU for receiving input of information necessary for generating the condition data DG includes, for example, a user interface element for receiving at least one input among the time length of the image, the area of the projection target object, and the number of projection target objects.

The image analyzer 32c analyzes the captured image data DGa to thereby estimate the shape of the object OJa. Accordingly, the image analyzer 32c generates the analysis data DGb. Specifically, the image analyzer 32c generates the analysis data DGb based on the plurality of captured images indicated by the captured image data DGa and using a correspondence relationship between a coordinate of a pattern image in a coordinate system of a captured image of the camera 10 and a coordinate of a pattern image in a coordinate system of the display panel of the projector 20.

The condition setter 32d generates the condition data DGc based on input using the user interface image GU explained below. Here, the condition setter 32d may generate preset condition data DGc before the input using the user interface image GU explained below or when a part of items of the condition data DGc is not input.

The cost calculator 32e generates the request information DGd based on the unit price table TB, the analysis data DGb, and the condition data DGc. The cost calculator 32e transmits the request information DGd to the external device 40 via the communication device 33 based on an instruction from the user.

The projector controller 32f controls the operation of the projector 20 to thereby cause the projector 20 to display various images.

### 1-4. Cost calculation method

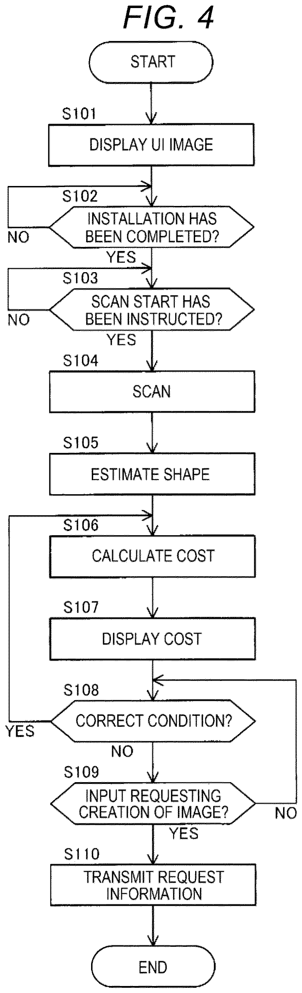

FIG. 4 is a flowchart illustrating a flow of a cost calculation method according to the embodiment. The cost calculation method is executed by the information processing device 30 explained above.

Specifically, as illustrated in FIG. 4, first, in step S101, the display controller 32b causes the display device 34 to display the user interface image GU explained below.

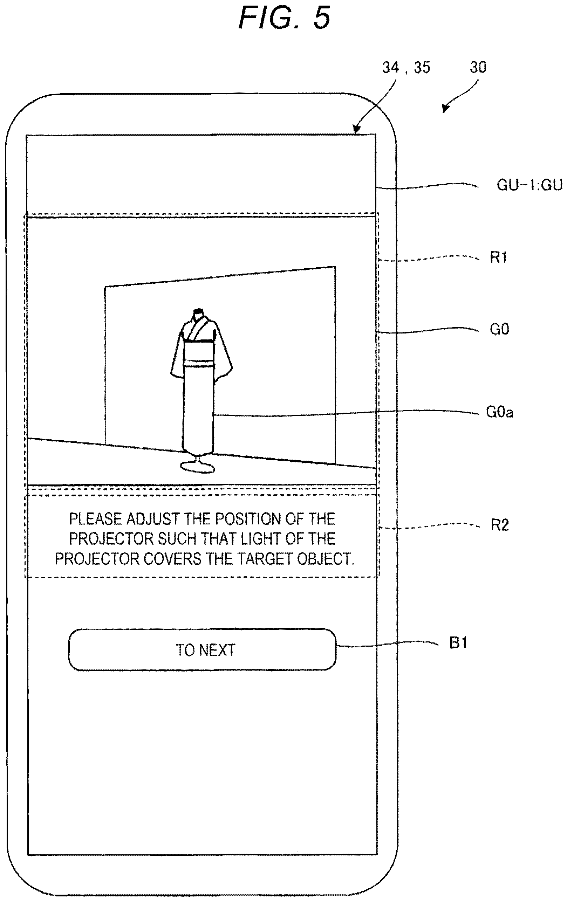

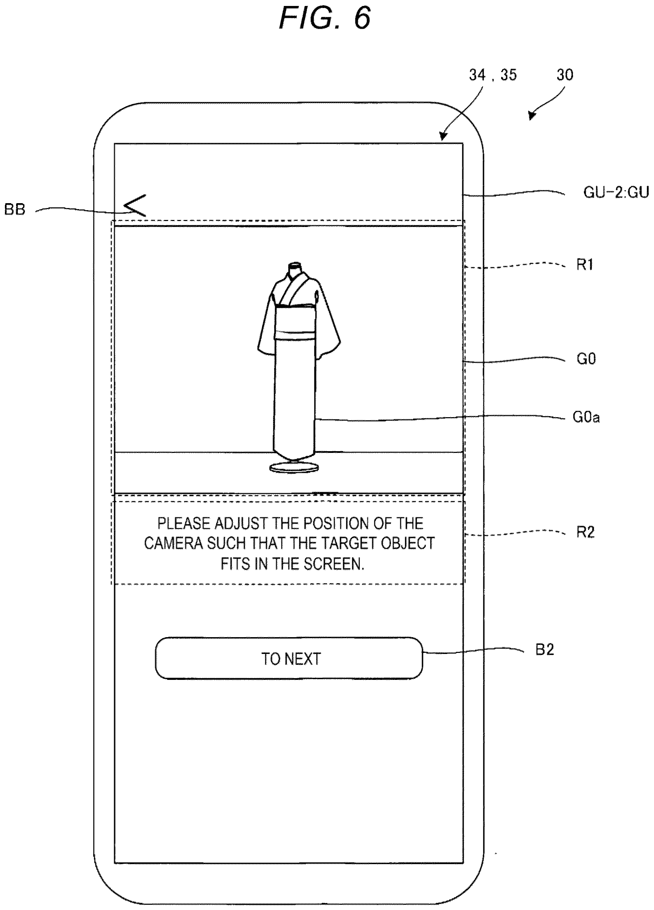

Subsequently, in step S102, the acquirer 32a determines whether installation of the camera 10 and the projector 20 has been completed. This determination is executed based on operation on the user interface image GU until it is determined that the installation of the camera 10 and the projector 20 has been completed (step S102: NO). Here, after input to a button B1 is received in a user interface image GU-1 illustrated in FIG. 5 explained below, when input to a button B2 is received in a user interface image GU-2 illustrated in FIG. 6 explained below, the acquirer 32a determines that the installation of the camera 10 and the projector 20 has been completed (step S102: YES). On the other hand, after the input to the button B1 is received in the user interface image GU-1 illustrated in FIG. 5 explained below, step S102 is repeated until the input to the button B2 is received in the user interface image GU-2 illustrated in FIG. 6 explained below (step S102: NO).

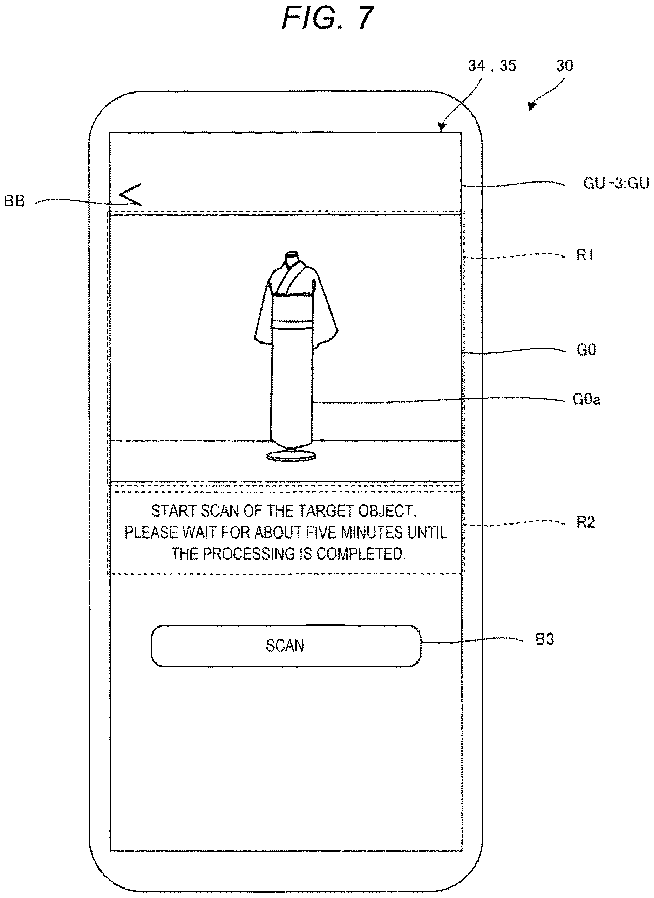

When determining that the installation of the camera 10 and the projector 20 has been completed (step S102: YES), in step S103, the acquirer 32a determines whether an instruction to start scan for measuring the projection surface of the projector 20 has been given. This determination is executed based on operation on the user interface image GU until an instruction to start scan is given (step S103: NO). Here, when input to a button B3 is received in a user interface image GU-3 illustrated in FIG. 7 explained below, the acquirer 32a determines that an instruction to start scan is given (step S103: YES). Step S103 is repeated until input to the button B3 is received (step S103: NO).

When an instruction to start scan has been given (step S103: YES), the acquirer 32a executes scan in step S104. In this specification, measuring the projection surface is sometimes referred to as scan. In the present embodiment, the captured image data DGa is acquired by the scan. Further, using the captured image data DGa, information representing a correspondence relationship between coordinates of pixels in the coordinate system of the captured image of the camera 10 and coordinates of pixels in the coordinate system of the display panel of the projector 20 is generated.

Subsequently, in step S105, the image analyzer 32c analyzes the projection surface based on the captured image data DGa to thereby estimate the shape of the object OJa. Accordingly, the analysis data DGb is generated.

Subsequently, in step S106, the cost calculator 32e generates the request information DGd based on the analysis data DGb and the condition data DGc.

Subsequently, in step S107, the display controller 32b causes the display device 34 to display cost indicated by the request information DGd.

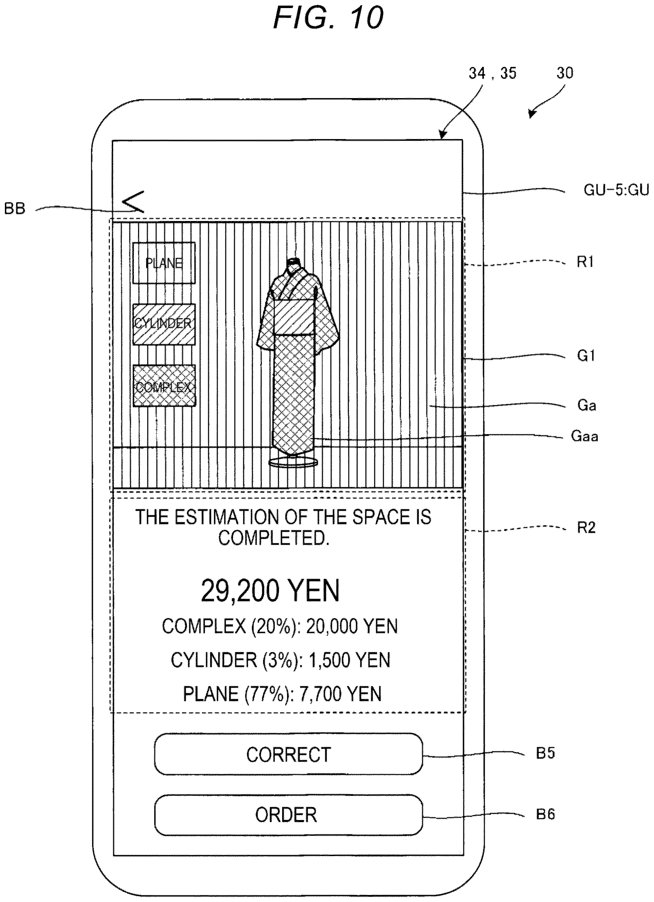

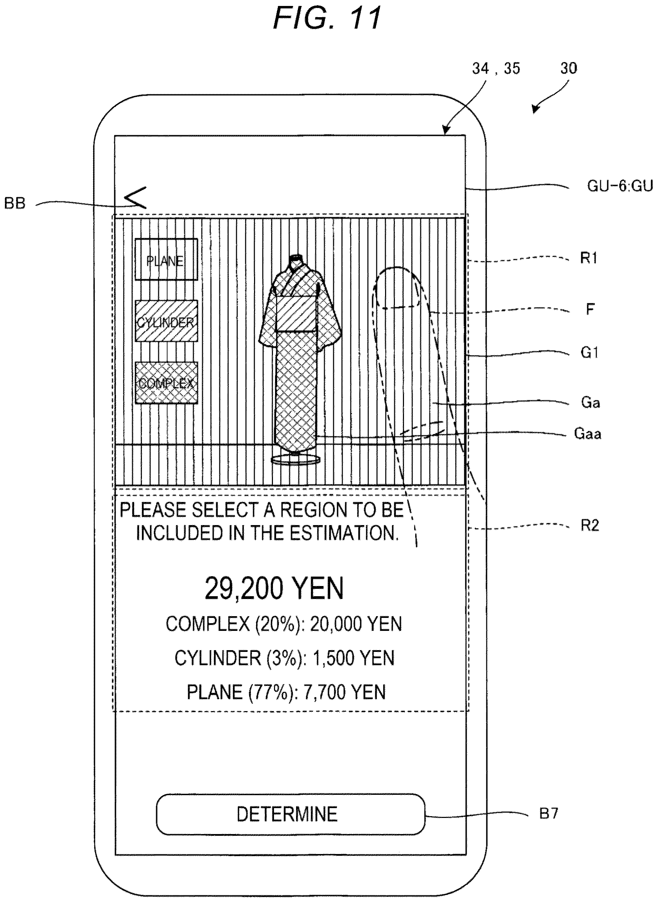

Subsequently, in step S108, the cost calculator 32e determines whether the condition indicated by the condition data DGc has been corrected. Here, after input to a button B5 is received in a user interface image GU-5 illustrated in FIG. 10 explained below, when input to a button B7 is received in a user interface image GU-6 illustrated in FIG. 11 explained below, the cost calculator 32e determines that the condition has been corrected (step S108: YES) and step S106 is executed. On the other hand, when input to a button B6 is received in the user interface image GU-5 illustrated in FIG. 10 explained below, the cost calculator 32e determines that the condition has not been corrected (step S108: NO).

When the condition indicated by the condition data DGc has been corrected (step S108: YES), the cost calculator 32e returns to the execution of step S106 explained above.

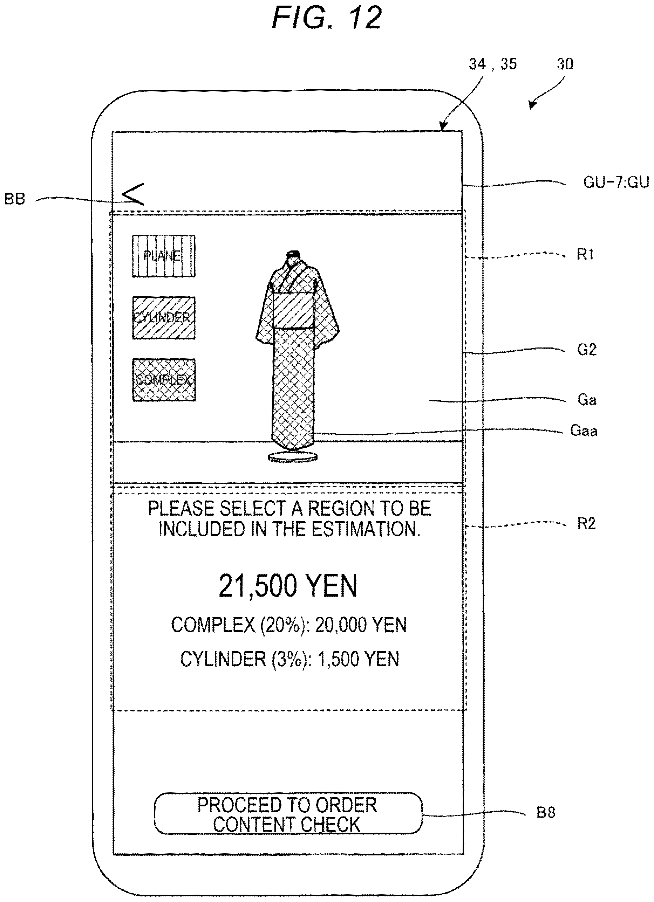

On the other hand, when the condition indicated by the condition data DGc has not been corrected (step S108: NO), in step S109, the cost calculator 32e determines whether there is input requesting creation of the image based on the request information DGd. Here, when input to a button B8 is received in a user interface image GU-7 illustrated in FIG. 12 explained below, the cost calculator 32e determines that there is input requesting creation of the image (step S109: YES) and step S110 is executed. On the other hand, steps S108 and S109 are repeated until input to the button B8 is received in the user interface image GU-7 illustrated in FIG. 12 explained below (step S109: NO).

When there is no input requesting creation of the image based on the request information DGd (step S109: NO), the cost calculator 32e returns to the execution of step S108 explained above.

On the other hand, when there is input requesting creation of the image based on the request information DGd (step S109: YES), in step S110, the cost calculator 32e transmits the request information DGd to the external device 40 via the communication device 33.

The above is the flow of the cost calculation method. Examples of the user interface image GU used for the cost calculation method are explained below with reference to FIGS. 5 to 13. In FIGS. 5 to 8 and FIGS. 10 to 13, user interface images GU-1 to GU-8 that transition according to a progress status of the cost calculation method are illustrated. In the following explanation, the user interface images GU-1 to GU-8 are sometimes referred to as user interface image GU without being distinguished from one another. The user interface image GU is not limited to the examples illustrated in FIGS. 5 to 8 and FIGS. 10 to 13.

FIG. 5 is a diagram illustrating installation of the projector 20. In FIG. 5, the user interface image GU-1 displayed on the display device 34 at the time of the execution of step S102 explained above is illustrated. The user interface image GU-1 includes regions R1 and R2 and the button B1.

In the region R1, a necessary image is displayed according to the progress status of the cost calculation method. In the region R1 of the user interface image GU-1, a real-time captured image G0 by the camera 10 is displayed. The captured image G0 includes an image G0a indicating the object OJa. Accordingly, the presence of a projection target object in each of the image capturing region RC of the camera 10 and the projection region RP of the projector 20 can be visually recognized in the region R1.

In the region R2, explanation corresponding to the progress status of the cost calculation method is displayed. In the region R2 of the user interface image GU-1, explanation concerning an installation method for the projector 20 is displayed. In the example illustrated in FIG. 5, characters "Please adjust the position of the projector such that the light of the projector covers the target object" are displayed in the region R2.

The button B1 is an indication for receiving completion of the installation of the projector 20 and is used for the determination in step S102 explained above. When operation on the button B1 is performed, display for installing the camera 10 is performed as illustrated in the next FIG. 6.

FIG. 6 is a diagram illustrating installation of the camera 10. In FIG. 6, the user interface image GU-2 displayed on the display device 34 at the time of the execution of step S102 explained above is illustrated. The user interface image GU-2 is the same as the user interface image GU-1 explained above except that the user interface image GU-2 includes buttons B2 and BB instead of the button B1.

However, explanation concerning an installation method for the camera 10 is displayed in the region R2 of the user interface image GU-2. In the example illustrated in FIG. 6, characters "Please adjust the position of the camera such that the target object fits in this screen" are displayed in the region R2.

The button B2 is an indication for receiving completion of the installation of the camera 10 and is used for the determination in step S102 explained above. When operation on the button B2 is performed, step S103 explained above is executed.

The button BB is an indication for returning the display of the user interface image GU to the immediately preceding state. When the button BB is operated in the user interface image GU-2, the user interface image GU-1 explained above is displayed. The button BB is also displayed in each of the user interface images GU-3 to GU-8 explained below. When the button BB is operated, the user interface image GU is returned to the immediately preceding state.

FIG. 7 is a diagram illustrating an instruction to start acquisition of a captured image used for measurement of the projection surface. In FIG. 7, the user interface image GU-3 displayed on the display device 34 at the time of the execution of step S103 explained above is illustrated. The user interface image GU-3 is the same as the user interface image GU-2 explained above except that the user interface image GU-3 includes the button B3 instead of the button B2.

However, explanation concerning the start of measurement of the projection surface is displayed in the region R2 of the user interface image GU-3. In the example illustrated in FIG. 7, characters "Start scan of the target object. Please wait for about five minutes until the processing is completed" are displayed in the region R2.

The button B3 is an indication for receiving the start of measurement of the projection surface and is used for the determination in step S103 explained above. When operation on the button B3 is performed, step S104 explained above is executed.

In step S104, the acquirer 32a controls the operation of the projector 20 to sequentially project a plurality of pattern images onto the projection target object and controls the operation of the camera 10 to capture the pattern images projected onto the projection target object. Accordingly, the captured image data DGa indicating a plurality of captured images obtained by capturing the pattern images with the camera 10 is obtained.

As the pattern images, for example, a binary code pattern is used. The binary code pattern refers to an image for expressing a coordinate of the display device using a binary code. The binary code is a technique of expressing, with on and off of a switch, values of digits in the case in which any numerical value is expressed in binary. When a binary code pattern is used as a pattern image, an image projected by the projector 20 corresponds to the switch. Pattern images equivalent to the number of digits of a binary number representing a coordinate value are required. Separate pattern images are required respectively for a coordinate in the longitudinal direction and a coordinate in the lateral direction. For example, when the resolution of the display panel of the projector 20 is 120×90, since each of 120 and 90 is expressed by a binary number of seven digits, seven images are required to express the coordinate in the longitudinal direction and seven images are required to express the coordinate in the lateral direction. Here, the plurality of pattern images include one or both of a white image displaying white over the entire projection region RP and a black image displaying black over the entire projection region RP.

When the binary code pattern is used as the pattern image, in general, the robustness of measurement is reduced by the influence of ambient light such as illumination. For this reason, when the binary code pattern is used as the pattern image, it is preferable to concurrently use a complementary pattern from the viewpoint of suppressing the influence of ambient light and improving the robustness of measurement. The complementary pattern is an image in which black and white are inverted.

The pattern image is not limited to the binary code pattern and may be other structured light such as a dot pattern, a rectangular pattern, a polygonal pattern, a checker pattern, a gray code pattern, a phase shift pattern, or a random dot pattern.

As explained above, a plurality of captured images obtained by capturing the pattern images with the camera 10 are obtained. In step S105 explained above, the image analyzer 32c generates the analysis data DGb by estimating the shape of the projection surface based on the plurality of captured images and determining the index value concerning the brightness of the space in which the image capturing has been performed. The estimation of the shape includes estimating the shape of the projection surface included in the image capturing region RC, for example, by analyzing the captured image.

Specifically, the image analyzer 32c associates a coordinate of a pattern image in a coordinate system of a captured image of the camera 10 and a coordinate of a pattern image in a coordinate system of the display device of the projector 20, for example, based on the plurality of captured images and divides the projection surface for each region where the difference between the positions of the associated coordinates is equal to or larger than the predetermined threshold. Accordingly, the projection surface can be divided into a region of the object OJa and other regions.

The image analyzer 32c may measure the distance between the projector 20 and the projection surface for each pixel of the projector 20, for example, based on the plurality of captured images, extract pixels in which a rate of change in the distance between adjacent pixels is equal to or larger than a fixed value, and divide the projection surface in a region surrounded by the extracted pixels. Accordingly, the projection surface can be divided into the region of the object OJa and the other regions. The image analyzer 32c may divide the projection surface into regions with Watershed of OpenCV or may divide the projection surface into regions with segmentation using deep learning.

After dividing the projection surface into the regions as explained above, the image analyzer 32c determines shapes for the divided regions. Determination of whether the shape of a target region is a planar shape or a shape other than the planar shape is performed by, for example, plane detection by Unity AR Foundation, plane detection by three-dimensional Hough transform, or plane detection using python RANSAC. When the shape of the target region is a shape other than the planar shape, the shape of the target region is determined by, for example, estimating the shape using deep learning. "python" is a registered trademark.

The image analyzer 32c calculates, based on a captured image, an index value concerning the brightness of a space in which image capturing has been performed. Specifically, for example, the image analyzer 32c calculates a contrast ratio between the luminance of the projection surface in an initially captured image at the time when an image is not projected from the projector 20 or when a black image is projected from the projector 20 and the luminance of the projection surface in the initially captured image at the time when a white image is projected from the projector 20. An environment is brighter and an image is less easily seen as the contrast ratio is smaller. Therefore, when the contrast ratio is smaller than a predetermined value, notification indicating that the space is too bright and is not suitable for projection may be displayed on the user interface image GU. The index value concerning the brightness may be calculated by another publicly-known method.

As explained above, the cost calculation method includes estimating the shape of the object OJa by analyzing a captured image obtained by capturing an image of the object OJa using a computer in step S105.

Here, the estimating the shape includes determining which of a three-dimensional shape and a two-dimensional shape the shape of the object OJa is.

The estimating the shape includes dividing the object OJa into regions for each of types of shapes. In the present embodiment, a complex surface, a spherical surface, a cylindrical surface, and a plane are used as the types of the shapes.

The cost calculation method includes analyzing a captured image to determine an index value concerning brightness of a space in which image capturing has been performed.

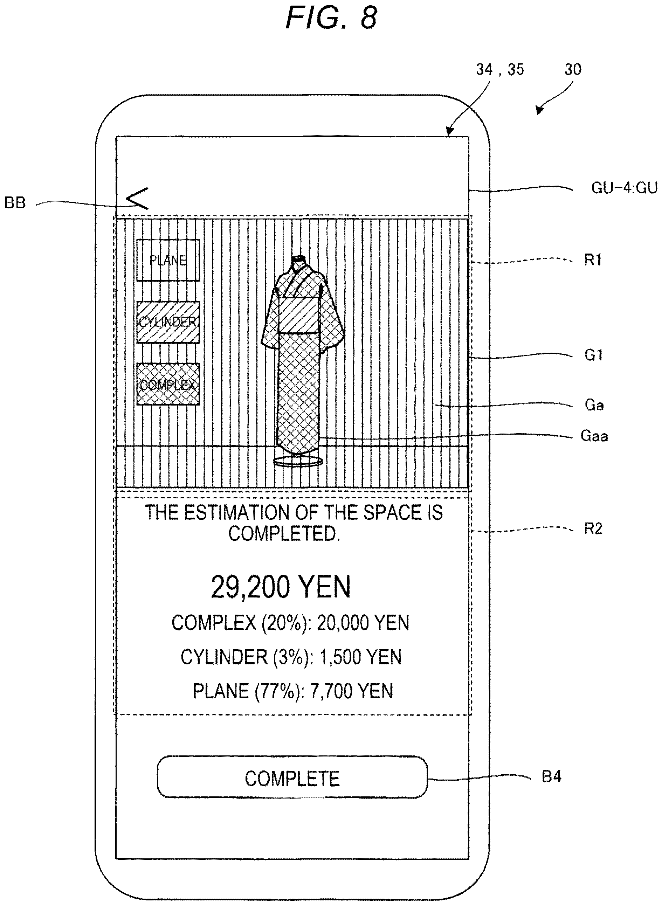

FIG. 8 is a diagram illustrating a display example of calculated cost. In FIG. 8, the user interface image GU-4 displayed on the display device 34 by the execution of step S107 explained above is illustrated. The user interface image GU-4 is the same as the user interface image GU-3 explained above except that the user interface image GU-4 includes a button B4 instead of the button B3.

However, an image G1 is displayed in the region R1 of the user interface image GU-4. The image G1 includes a captured image Ga. The captured image Ga is the initially captured image explained above among the plurality of captured images indicated by the captured image data DGa and includes an image Gaa indicating the object OJa. In the image G1, the divided regions explained above are displayed in different forms for each shape.

In the region R2 of the user interface image GU-4, an estimation result of cost required to create an image is displayed. In the example illustrated in FIG. 8, characters of "The estimation of the space is completed" indicating that estimation has been completed, an estimated amount "29,200 yen", details of the estimated amount "complex (20%): 20,000 yen, cylinder (3%): 1,500 yen, plane (77%): 7,700 yen" are displayed in the region R2.

The button B4 is an indication for receiving the estimated amount having been checked. When operation on the button B4 is performed, display illustrated in FIG. 10 explained below is performed. The display of the user interface image GU-4 illustrated in FIG. 8 may be omitted and display illustrated in FIG. 10 may be performed next to the display of the user interface image GU-3.

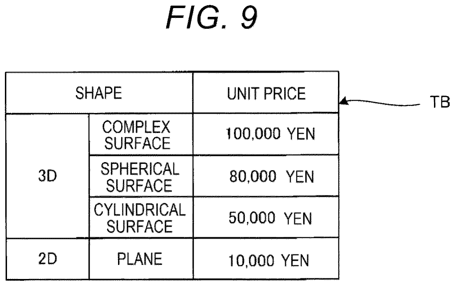

FIG. 9 is a diagram illustrating an example of the unit price table TB used for calculating cost. The estimation result of the cost illustrated in FIG. 8 is calculated by the cost calculator 32e using the unit price table TB illustrated in FIG. 9 in step S106 explained above. As explained above, the cost calculator 32e generates the request information DGd by calculating cost based on the analysis data DGb and the condition data DGc besides the unit price table TB.

As illustrated in FIG. 9, the unit price table TB indicates a relation between the shape of the projection surface and a unit price. In the example illustrated in FIG. 9, the shape is classified into types of a complex surface, a spherical surface, a cylindrical surface, and a flat surface and the unit price is set for each of the types of the shapes. The unit price illustrated in FIG. 9 is an example and is not limited to this. The number of classifications of the types of the shapes in the unit price table TB is not limited to the example illustrated in FIG. 9 and is optional.

The cost calculator 32e calculates cost, for example, based on the following calculation formula.

(Cost) = (a unit price of a complex surface × an area ratio of the complex surface + a unit price of a spherical surface × an area ratio of the spherical surface + a unit price of a cylindrical surface × an area ratio of the cylindrical surface + a unit price of a plane × an area ratio of the plane) × (time length of content) × (the number of divided regions) × (a contrast index)

Here, the area ratio is a ratio of an area occupied by regions having shapes, for which cost is calculated, to a total area of all the regions in the captured image.

As explained above, the cost necessary for creating content can be estimated such that the cost is higher as the projection area is larger, higher as the shape of the projection target object is more complicated, higher as the projection environment is brighter, and higher as the content is longer.

A lower limit value of the cost may be set in advance. In this case, even if the time length of the content is extremely short, fixed cost is calculated.

As explained above, the cost calculation method includes calculating, using a computer, based on the shape of the object OJa, the cost concerning the creation of the image to be projected onto the object OJa using the projector 20.

Here, the calculating the cost includes calculating the cost based on a unit price set for each of the types of the shapes and a ratio of an area occupied by the object OJa in the captured image Ga.

The calculating the cost includes calculating the cost based on the shape of the object OJa and the index value concerning the brightness of the space in which the image capturing has been performed.

FIG. 10 is a diagram illustrating a display example for changing an estimation region. In FIG. 10, the user interface image GU-5 displayed on the display device 34 after the operation on the button B4 illustrated in FIG. 8 explained above is performed is illustrated. The user interface image GU-5 is the same as the user interface image GU-4 explained above except that the user interface image GU-5 includes the buttons B5 and B6 instead of the button B4.

The button B5 is an indication for receiving a shift to processing for correcting a target region of estimation. When operation on the button B5 is performed, display illustrated in FIG. 11 explained below is performed.

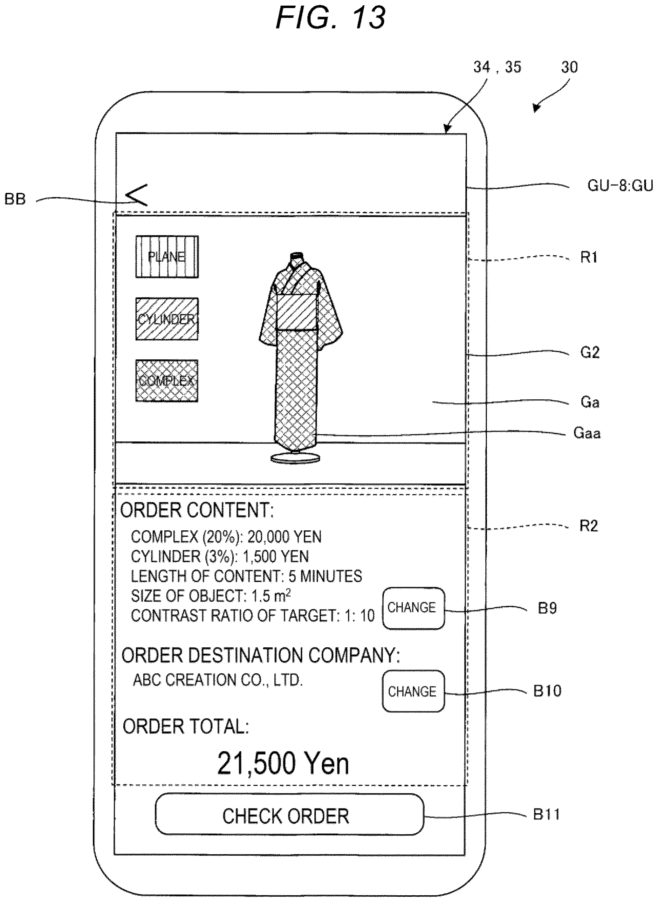

The button B6 is an indication for receiving a shift to processing for a content creation request. When operation on the button B6 is performed, display illustrated in FIG. 13 explained below is performed.

FIG. 11 is a diagram illustrating operation of changing the estimation region. In FIG. 11, the user interface image GU-6 displayed on the display device 34 after the operation on the button B5 illustrated in FIG. 10 is performed is illustrated. The user interface image GU-6 is the same as the user interface image GU-4 explained above except that the user interface image GU-6 includes the button B7 instead of the buttons B5 and B6.

However, the image G1 in the region R1 of the user interface image GU-6 is capable of receiving input for selecting the regions divided for each of the types of the shapes explained above. A region tapped by a finger F indicated by an alternate long and two short dashes line in FIG. 11 is selected. When the same region is tapped again, the selection is released.

As explained above, the cost calculation method further includes receiving input of a condition concerning cost.

The button B7 is a display for receiving determination of a target region of estimation. When operation on the button B7 is performed, step S106 is executed. Accordingly, estimation cost in the selected region is calculated.

FIG. 12 is a diagram illustrating a display example after the estimation region is changed. In FIG. 12, the user interface image GU-7 displayed on the display device 34 after the operation on the button B7 illustrated in FIG. 11 explained above is performed is illustrated. The user interface image GU-7 is the same as the user interface image GU-6 explained above except that the user interface image GU-7 includes the button B8 instead of the button B7.

However, a selection result in FIG. 11 explained above is displayed in the image G1 in the region R1 of the user interface image GU-7. In the region R2 of the user interface image GU-7, an estimated amount corresponding to the selection result in FIG. 11 explained above is displayed.

As explained above, the calculating the cost includes calculating the cost based on the shape of the object OJa and the condition indicated by the condition data DGc.

Here, the condition indicated by the condition data DGc includes at least one of a time length of content, the area of the object OJa, and the number of the objects OJa.

Receiving the input of the condition indicated by the condition data DGc includes receiving input for selecting at least one object OJa from a plurality of objects.

The button B8 is an indication for receiving a shift to processing for a content creation request. When operation on the button B8 is performed, display illustrated in FIG. 13 explained below is performed.

FIG. 13 is a diagram illustrating a display example for a content creation request. In FIG. 13, the user interface image GU-8 displayed on the display device 34 after the operation on the button B6 illustrated in FIG. 10 explained above is performed or after the operation on the button B8 illustrated in FIG. 12 explained above is performed is illustrated. In FIG. 13, a display example in the case in which order content is corrected in the user interface image GU-7 is illustrated. The user interface image GU-8 is the same as the user interface image GU-7 explained above except that the user interface image GU-8 includes a button B11 instead of the button B8.

However, the order content and an order destination company name are displayed in the region R2 of the user interface image GU-8. The region R2 of the user interface image GU-8 includes a button B9 for receiving a change of the order content and a button B10 for receiving a change of the order destination company. When operation on the button B9 is performed, an indication for receiving a change in the order content appears, though not illustrated. When operation on the button B10 is performed, an indication for receiving a change of the order destination company appears.

The button B11 is an indication for receiving input requesting creation of content. When operation on the button B11 is performed (step S109: YES), the request information DGd is transmitted to the external device 40 in step S110. That is, the request information DGd is transmitted to the order destination company. The order destination company is an owner, an administrator, or the like of the external device 40. When the external device 40 is a server device or the like, the order destination company may acquire the request information DGd by receiving notification via the server device or the like or accessing the server device.

As explained above, the cost calculation method further includes receiving input requesting creation of an image and transmitting the request information DGd indicating the cost and the captured image Ga to the external device 40 when receiving the input requesting creation of an image.

As explained above, the cost calculation method includes estimating the shape of at least one object OJa by analyzing, using a computer, a captured image obtained by capturing an image of the at least one object OJa and calculating, based on the shape of the at least one object OJa, cost concerning creation of an image to be projected onto the at least one object OJa using the projector 20.

In the cost calculation method explained above, it is possible to estimate, based on the captured image obtained by capturing an image of the object OJa, the cost concerning the creation of an image to be projected onto the object OJa using the projector 20. Therefore, it is possible to forecast cost required to create the image.

In the present embodiment, as explained above, estimating the shape includes determining which of a three-dimensional shape or a two-dimensional shape the shape of the at least one object OJa is. Accordingly, different costs can be calculated when the shape of the object OJa is a three-dimensional shape and when shape of the object OJa is a two-dimensional shape. As a result, the validity of the calculated cost can be increased.

As explained above, the estimating the shape includes dividing the at least one object OJa into regions for each of the types of the shapes. For this reason, different cost can be calculated according to a type of the shape of the object OJa. As a result, the validity of the calculated cost can be increased.

Further, as explained above, the calculating the cost includes calculating the cost based on a unit price set for each of the types of the shapes and a ratio of an area occupied by the at least one object OJa in the captured image Ga. For this reason, different cost can be calculated according to a ratio of an area occupied by the object OJa in the captured image Ga. As a result, the validity of the calculated cost can be increased.

As explained above, the cost calculation method further includes analyzing a captured image to thereby determine an index value concerning the brightness of a space in which image capturing has been performed. The calculating the cost includes calculating the cost based on the shape of the at least one object OJa and the index value. For this reason, different cost can be calculated according to the brightness of the space in which the image capturing has been performed. As a result, the validity of the calculated cost can be increased.

Further, as explained above, the cost calculation method further includes receiving input of a condition concerning cost. The calculating the cost includes calculating the cost based on the shape of the at least one object OJa and the condition. For this reason, different cost can be calculated according to the condition concerning the cost. As a result, the validity of the calculated cost can be increased.

As explained above, the condition includes at least one of the time length of the image, the area of the at least one object OJa, and the number of the at least one object OJa. For this reason, different cost can be calculated according to at least one of the time length of the image, the area of the object OJa, and the number of the objects OJa. As a result, the validity of the calculated cost can be increased.

Further, as explained above, the at least one object OJa is a plurality of objects OJa. The receiving input of the condition includes receiving input for selecting at least one object OJa from the plurality of objects OJa. For this reason, cost concerning creation of an image to be projected using the projector 20 can be calculated for the object OJa designated by the user.

As explained above, the cost calculation method further includes receiving input requesting creation of the image and transmitting the request information DGd indicating the cost and the captured image Ga to the external device 40 when receiving the input requesting creation of the image. Therefore, after checking a calculated cost, it is possible to request the outside to create an image.

The cost calculation method explained above is performed by the processing device 32 provided in the information processing device 30 executing the program PR. As explained above, the program PR causes the computer to execute estimating the shape of at least one object OJa by analyzing a captured image obtained by capturing an image of the at least one object OJa and calculating, based on the shape of the at least one object OJa, cost concerning creation of an image to be projected onto the at least one object OJa using the projector 20.

### 2. Modifications

The embodiments exemplified above can be variously modified. Specific aspects of modifications applicable to the embodiments explained above are exemplified below. Two or more aspects optionally selected from the following exemplification can be combined as appropriate in a range in which the aspects do not contradict one another.

### 2-1. Modification 1

In the embodiment explained above, the aspect in which the number of objects that can be the projection target object is one is exemplified. However, this aspect is not limiting and the number may be two or more. When the number of objects is two or more, input for selecting one or more of the objects may be received. For example, by tapping an object in the user interface image GU-6 illustrated in FIG. 11, it is possible to select an object and release the selection.

### 2-2. Modification 2

In the embodiment explained above, the aspect in which the correction of the condition indicated by the condition data DGc is received is exemplified. However, this aspect is not limiting and may be an aspect in which the correction is not performed. In this aspect, step S108 in FIG. 4 is omitted. In this case, cost may be calculated for all the regions. Input indicating whether to calculate cost for a region having a predetermined shape may be received before calculating the cost and the calculation of the cost may be performed targeting only a designated shape. For example, if "cylinder" or "complex" is selected and "plane" is not selected, the cost may be calculated targeting only "cylinder" and "complex" in S107.

### 3. Appendixes

A summary of the present disclosure is appended below.

(Appendix 1) A cost calculation method, by a computer, including: estimating a shape of at least one object by analyzing a captured image obtained by capturing an image of the at least one object; calculating, based on the shape of the at least one object, cost concerning creation of an image to be projected onto the at least one object using a projector; and notifying the cost.

In the aspect of the appendix 1 explained above, it is possible to estimate, based on the captured image obtained by capturing an image of the object, the cost concerning the creation of the image to be projected onto the object using the projector. Therefore, it is possible to forecast cost required to create the image.

(Appendix 2) The cost calculation method according to the appendix 1, wherein the estimating the shape of the at least one object includes determining which of a three-dimensional shape or a two-dimensional shape the shape of at least one object is. In the aspect of the appendix 2 explained above, different costs can be calculated when the shape of the object is a three-dimensional shape and when the shape of the object is a two-dimensional shape. As a result, the validity of the calculated cost can be increased.

(Appendix 3) The cost calculation method according to the appendix 1 or the appendix 2, wherein the estimating the shape of the at least one object includes dividing the at least one object into regions for each of types of shapes. In the aspect of the appendix 3 explained above, different cost can be calculated according to a type of the shape of an object. As a result, the validity of the calculated cost can be increased.

(Appendix 4) The cost calculation method according to any one of the appendix 1 to the appendix 3, wherein the calculating the cost includes calculating the cost based on a unit price set for each of the types of the shapes and a ratio of an area occupied by the at least one object in the captured image. In the aspect of the appendix 4 explained above, different cost can be calculated according to a ratio of an area occupied by an object in the captured image. As a result, the validity of the calculated cost can be increased.

(Appendix 5) The cost calculation method according to any one of the appendix 1 to the appendix 4, further comprising analyzing the captured image to thereby determine an index value concerning brightness of a space in which image capturing has been performed, wherein the calculating the cost includes calculating the cost based on the shape of the at least one object and the index value. In the aspect of the appendix 5 explained above, different cost can be calculated according to the brightness of the space in which the image capturing has been performed. As a result, the validity of the calculated cost can be increased.

(Appendix 6) The cost calculation method according to any one of the appendix 1 to the appendix 5, further comprising receiving input of a condition concerning cost, wherein the calculating the cost includes calculating the cost based on the shape of the at least one object and the condition. In the aspect of the appendix 6 explained above, different cost can be calculated according to the condition concerning the cost. As a result, the validity of the calculated cost can be increased.

(Appendix 7) The cost calculation method according to the appendix 6, wherein the condition includes at least one of a time length of the image, an area of the at least one object, and a number of the at least one object. In the aspect of the appendix 7 explained above, different cost can be calculated according to at least one of the time length of the image, the area of the object, and the number of objects. As a result, the validity of the calculated cost can be increased.

(Appendix 8) The cost calculation method according to the appendix 6 or the appendix 7, wherein the at least one object is a plurality of objects, and the receiving the input of the condition includes receiving input for selecting one or more objects from the plurality of objects. In the aspect of the appendix 8 explained above, cost concerning creation of an image to be projected using the projector can be calculated for an object specified by a user.

(Appendix 9) The cost calculation method according to any one of the appendix 1 to the appendix 8, further comprising: receiving input requesting creation of the image; and transmitting request information indicating the cost and the captured image to an external device when receiving the input requesting creation of the image. In the aspect of the appendix 9 explained above, after checking the calculated cost, it is possible to request the outside to create an image.

(Appendix 10) A recording medium recording a program, the program causing a computer to execute: estimating a shape of at least one object by analyzing a captured image obtained by capturing an image of the at least one object; calculating, based on the shape of the at least one object, cost concerning creation of an image to be projected onto the at least one object using a projector; and notifying the cost.

In the aspect of the appendix 10 explained above, it is possible to estimate, based on the captured image obtained by capturing an image of the object, the cost concerning the creation of the image to be projected onto the object using the projector. Therefore, it is possible to forecast cost required to create the image.

(Appendix 11) An information processing device including a processing device that executes: estimating a shape of at least one object by analyzing a captured image obtained by capturing an image of the at least one object; calculating, based on the shape of the at least one object, cost concerning creation of an image to be projected onto the at least one object using a projector; and notifying the cost.

In the aspect of the appendix 11 explained above, it is possible to estimate, based on a captured image obtained by capturing an image of an object, cost concerning creation of an image to be projected onto the object using the projector. Therefore, it is possible to forecast cost required to create the image.

## Claims

1. A cost calculation method , comprising:
by a computer,
estimating a shape of at least one object by analyzing a captured image obtained by capturing an image of the at least one object;
calculating, based on the shape of the at least one object, cost concerning creation of an image to be projected onto the at least one object using a projector; and
notifying the cost.

2. The cost calculation method according to claim 1, wherein the estimating the shape of the at least one object includes determining which of a three-dimensional shape or a two-dimensional shape the shape of at least one object is.

3. The cost calculation method according to claim 1 or claim 2, wherein the estimating the shape of the at least one object includes dividing the at least one object into regions for each of types of shapes.

4. The cost calculation method according to claim 3, wherein the calculating the cost includes calculating the cost based on a unit price set for each of the types of the shapes and a ratio of an area occupied by the at least one object in the captured image.

5. The cost calculation method according to any one of claim 1 to claim 4, further comprising, by analyzing the captured image, determining an index value concerning brightness of a space in which image capturing has been performed, wherein
the calculating the cost includes calculating the cost based on the shape of the at least one object and the index value.

6. The cost calculation method according to any one of claim 1 to claim 5, further comprising receiving input of a condition concerning cost, wherein
the calculating the cost includes calculating the cost based on the shape of the at least one object and the condition.

7. The cost calculation method according to claim 6, wherein the condition includes at least one of a time length of the image, an area of the at least one object, and a number of the at least one object.

8. The cost calculation method according to claim 6, wherein
the at least one object is a plurality of objects, and
the receiving the input of the condition includes receiving input for selecting one or more objects from the plurality of objects.

9. The cost calculation method according to any one of claim 1 to claim 8, further comprising:
receiving input requesting creation of the image; and
transmitting request information indicating the cost and the captured image to an external device when receiving the input requesting creation of the image.

10. A recording medium recording a program, the program causing a computer to execute:
estimating a shape of at least one object by analyzing a captured image obtained by capturing an image of the at least one object;
calculating, based on the shape of the at least one object, cost concerning creation of an image to be projected onto the at least one object using a projector; and
notifying the cost.

11. An information processing device comprising a processing device that executes:
estimating a shape of at least one object by analyzing a captured image obtained by capturing an image of the at least one object;
calculating, based on the shape of the at least one object, cost concerning creation of an image to be projected onto the at least one object using a projector; and
notifying the cost.
